# EUROPEAN PATENT APPLICATION

(11) **EP 1 864 990 A1**
(43) Date of publication of application: **12.12.2007**
(21) Application number: 06011319.8
(22) Date of filing: 01.06.2006
(51) Int. Cl.: C07F 9/50, C07F 9/02

(54) **Preparation of secondary phosphines**

(71) Applicant: Universität Wien, 1010 Wien (AT)
(72) Inventor: Kasák, Peter, Dr., 01001 Zilinia (SK); Widhalm, Michael, Dr., 1090 Wien (AT)
(74) Representative: Bachinger-Fuchs, Eva-Maria

(57) **Abstract**

The present invention relates to a method for preparing di-α-chiral and achiral di(sec. alkyl)phosphines of general formula Ia or Ib 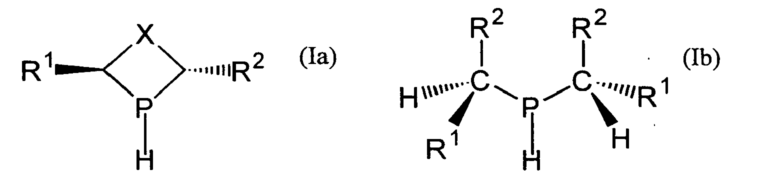 which is characterized in that sulfonates of general formula IIa or IIc or sulfates of general formula IIb or IId, are reacted with M₃P, wherein M is selected from Li, Na, K, and mixtures thereof, preferably Na. 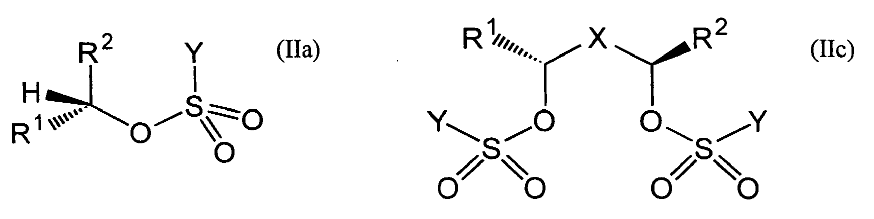 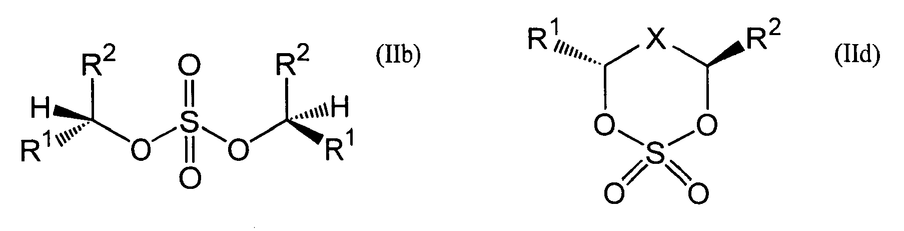 The secondary phosphines obtained are useful precursors for the preparation of tertiary phosphines and diphosphines.

## Description

The present invention relates to a method for preparing di-α-chiral and achiral di(sec. alkyl)phosphines of general formula Ia or Ib as well as to novel secondary phosphines which serve as versatile precursors for the synthesis of tertiary mono- and diphosphines.

Suitable ligands for transition metal complexes have been designed to tune efficiently chemo- and stereoselectivity in a plenitude of transition metal catalyzed reactions (Applied Homogeneous Catalysis with Organometallic Compounds (Vol.1 & 2), Comils, B.; Herrmann, W. A. (Eds.) VCH, Weinheim, 1996). It turned out that in many cases excellent yield and selectivity can be achieved when properly adjusting reaction conditions. Moreover, in many cases a pronounced substrate specificity was observed making it necessary to adjust electronic and steric interaction between substrate and ligand in a usually empirical incremental modification procedure. As a consequence synthetic protocols for short and economic access to such tailor-made ligands with structural diversity are needed.

One attractive feature in transition metal catalysis is the high degree of stereoselectivity which found a particular fruitful and broad application in the field of asymmetric catalysis using ligands as chiral auxiliaries. This enables the economic access to the desired enantiomer often in pure form and with a minimal amount of catalyst (and auxiliary).

Among (chiral) ligands polydentate phosphines (mostly bidentate) and more recently also monodentate phosphines have found widespread application (for general approaches to phosphines see: Methoden der Organischen Chemie (Houben-Weyl) Bd. 12/1, Sasse, K. (Ed) G. Thieme, Stuttgart, 1963, p 17-65; Methoden der Organischen Chemie (Houben-Weyl) Bd. 12/1, E1, Regitz, M. (Ed.) G. Thieme, Stuttgart, 1982, p 106-182 (monophosphines); p 183-240 (diphosphines); The chemistry of organophosphorus compounds, Hartley, F. R. (Ed.), Wiley & Sons, Chichester, 1990).

But while a huge number of aromatic mono- and diphosphines - typically belonging to the biaryl or ferrocene class or having attached a diarylphosphino group to a chiral backbone - have been prepared up to now and are successfully employed in numerous symmetric and asymmetric catalytic transformations (Catalytic Asymmetric Synthesis; Ojima, I. (Ed.) Wiley-VCH: New York, 2002; Hayashi, T.; Kawatsura, M.; Uozumi, Y. Chem. Commun. 1997, 561-562) the usefulness of (chiral) trialkyl (mono)phosphines has been hardly explored (examples can be found in: Jerphagnon, T.; Renaud, J.-L.; Bruneau, C. Tetrahedron: Asymmetry 2004, 15, 2101-2111; Clark, T. P.; Landis, C. R. Tetrahedron: Asymmetry 2004, 15, 2123-2137; Chen, Z.; Jiang, Q.; Zhu, G.; Xiao, D.; Cao, P.; Guo, C.; Zhang, X. J. Org. Chem. 1997, 62, 4521-4523). One drawback might be the lack of general preparation procedures for this group of potential auxiliaries.

As already mentioned above, in contrast to P-chiral triaryl- or diarylalkylphosphines, phosphites, phosphonites, phosphinites, and phosphoramidites, the group of (electron-rich) trialkylphosphines (see, e.g., Valentin, D. H.; Hillhouse, J. H. Synthesis 2003, 2437) has been scarcely explored (Graf, C.-D.; Malan, C.; Knochel, P. Angew. Chem. Int. Ed. 1998, 37, 3014; Graf, C.-D.; Malan, C.; Harms, K.; Knochel, P. J. Org. Chem. 1999, 64, 5581; Imamoto, T.; Oohara, N.; Takahashi, H. Synthesis 2004, 1353-1358).

The most popular examples belong to the group of DUPHOS-type ligands (Burk, M. J., U.S. Patent (**1991**), US 5008457; Burk, M. J. J. Am. Chem. Soc. 1991, 113, 8518-8519; Burk, M. J.; Feaster, J. E.; Harlow, R. L. Tetrahedron: Asymmetry 1991, 2, 569-592; Clark, T. P.; Landis, C. R. Tetrahedron: Asymmetry 2004, 15, 2123-2137). Among those the subgroup based on tartaric acid (Brunner, H.; Sievi, R. J Organomet. Chem. 1987, 328, 71-80) and D-mannitol (for example, RajanBabu, T. V.; Yan, Y.-Y.; Shin, S. J. Am. Chem. Soc. 2001, 123, 10207-10213) is of particular interest. The approach from carbohydrates does not require optical resolution procedures or asymmetric synthesis, offers structural diversability, and typically gives access to phosphines with considerable solubility in water. This property is of high importance since it opens the possibility to conduct reactions also in aqueous phase with the potential to facilitate work-up and reuse of the catalyst and to establish environmentally benign processes.

In the majority of cases substituted phospholane moieties have been introduced pairwise to alkyl (or aryl) backbones leading to bidentate ligands with C₂ symmetry. The benefits of C₂ symmetry for auxiliaries in asymmetric transformations resulting in reduced number of diastereomorphous transition states with usually better asymmetric induction has been discussed (Whitesell, J. K. Chem. Rev. 1989, 89, 1581-1590). For monophosphine ligands the same is true if a propeller shaped arrangement with C₃ symmetry is adopted (Moberg, C. Angew. Chem. 1998, 110, 260-281).

While tripodal ligands with C₃ symmetry have been frequently reported (for example, Whitnall, M. R.; Hii (Mimi), K. K.; Thomton-Pett, M.; Kee, T. P. J. Organomet. Chem. 1997, 529, 35-50) monodentate monophosphines are less common (see, e.g. You, J.; Wróblewski, A. E.; Verkade, J. G. Tetrahedron 2004, 60, 7877-7883) and to the best of the inventors' knowledge only a single paper has been published dealing with the synthesis of C₃ symmetric monophosphanes with chiral centers attached to P (Wyatt, P. Eley, H.; Charmant, J.; Daniel, B. J.; Kantacha, A. Eur. J Org. Chem. 2003, 4216-4226).

It appears therefore desireable to find a convenient synthetic route to α-chiral hydrophilic trialkylphosphines with C₃-symmetry, preferably using cheap precursors from the chiral pool. Of particular interest is the synthesis of alkylphosphines with improved water solubility, preferably those with hydroxy groups, which can be used not only as chiral auxiliaries but will also find applications in biology or medicine.

Known syntheses to secondary phosphines typically require either coupling of Grignard reagents with PCl₃ or HP(O)(OEt)₂, or the use of gaseous PH₃. The first protocol needs an additional step to convert R₂PCl or R₂P(O)H to R₂PH (for example, Busacca, C. A. et al., Org. Lett. 2005, 7, 4277-4280) and moreover, the procedure is not applicable to the production of alpha-chiral compounds from chiral precursors because of the configurative lability of Grignard compounds (for the inversion of Grignard reagents see, for example, Maerker, A.; Geuss, R. Angew. Chem. 1971, 83, 288). The second protocol involves handling of dangerous PH₃ gas and is frequently less selective (Braun, W. et al., Eur. J. Inorg. Chem. 2004, 2235-2243).

It is the object of the present invention to provide a method for preparing di(sec.alkyl)phosphines, preferably di-α-chiral phosphines, from which tertiary mono and diphosphines can readily be prepared, which obviates the drawbacks and problems associated with the processes known in the art.

A further object of the invention is the provision of novel secondary and tertiary phosphines as well as diphosphines, which are useful in catalytic transformations.

This object is achieved by the method of claim 1. According to the present invention, the method for preparing di-α-chiral and achiral di(sec. alkyl)phosphines of general formula Ia or Ib 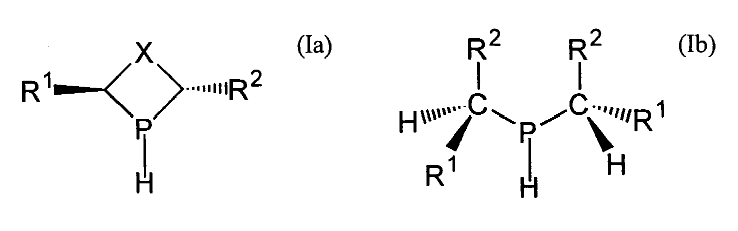 wherein
a) R¹, R² independently represent C1-C6 n-alkyl, optionally substituted with
   i) C 1-C4-n-alkyl,
   ii) aryl selected from phenyl, p-tolyl or 2-naphthyl,
   iii) -OR³, with R³ being tetrahydropyran-2-yl, 1-ethoxy-ethyl, phenyl, p-tolyl, benzyl, 2-naphthyl, -CH₂-2-naphthyl, methyl, ethyl or 2-propyl,
   iv) CH₂OR⁴, with R⁴ being tetrahydropyran-2-yl, 1-ethoxy-ethyl, phenyl, p-tolyl, benzyl, 2-naphthyl, -CH₂-2-naphthyl, or
   v) dimethyl amine or di-(2-propyl)amine, or
b) R¹CHR² in formula Ib together represents C5 or C6 cycloalkyl,
   and X represents (CH₂)ₙ with n = 1-3, CH₂OCH₂ or CH₂NR⁵CH₂ wherein R⁵ is C1-C4-alkyl or 2-propyl,
   is characterized in that sulfonates of general formula IIa or IIc or sulfates of general formula IIb or IId, wherein Y is selected from methyl, phenyl, p-tolyl, and p-bromophenyl, and X, R¹ and R² are defined as above, are reacted with M₃P, wherein M is selected from Li, Na, K, and mixtures thereof, preferably Na.

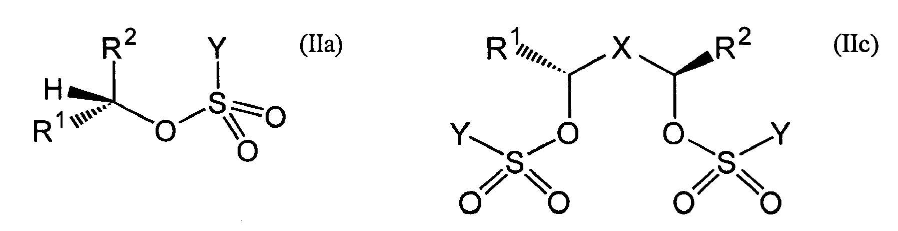

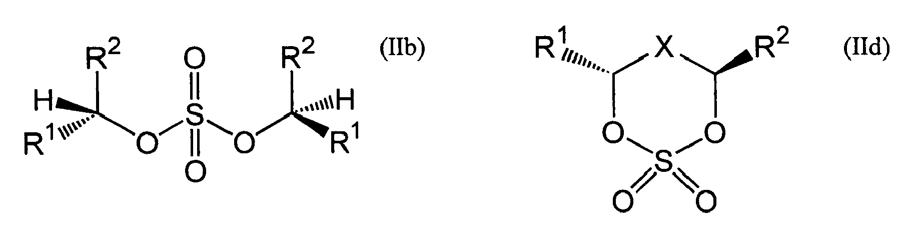

This one-step synthesis to secondary phosphines is superior compared to the known procedures, because it neither requires Grignard reagents nor gaseous PH₃. The M₃P reagent is prepared either from red phosphorus and lithium, sodium or potassium naphthalenide (U.S. Patent 3,397,039) or from phosphorus and sodium at elevated temperature (Jarvis, R. F. Jr.; Jacubinas, R. M.; Kaner, R. B. Inorg. Chem. 2000, 39, 3243-3246*)* following published procedures. The reaction is carried out in polar, aprotic solvents, typically in THF, DME, DMF, or DMA at a temperature in the range of 25-55°C, typically 40-50°C.

The method according to the invention is particularly useful for the preparation of α-chiral phosphines from chiral precursors. It has been found that enantiopure precursors as defined above react to di-α-chiral secondary phosphines. The reaction proceeds with clean inversion of configuration, and no formation of epimeric side products has been observed, evidencing the configurative stability of chiral carbon centers under the reaction conditions. These products represent chiral P-modules attachable to chiral or achiral backbones to form new chiral mono or diphosphines.

According to a preferred embodiment of the inventive method, R¹, R² independently represent C1-C6 n-alkyl, optionally substituted with
i) C1-C4-n-alkyl,
ii) aryl selected from phenyl, p-tolyl or 2-naphthyl, or
iii) -OR³, with R³ being tetrahydropyran-2-yl, 1-ethoxy-ethyl, phenyl, p-tolyl, benzyl, 2-naphthyl, -CH₂-2-naphthyl, methyl, ethyl or 2-propyl, or
iv) CH₂OR⁴, with R⁴ being tetrahydropyran-2-yl, 1-ethoxy-ethyl, phenyl, p-tolyl, benzyl, 2-naphthyl, -CH₂-2-naphthyl, or
R¹CHR² together represents C5 or C6 cycloalkyl.

According to a more preferred embodiment, R¹, R² independently represent C1-C6 n-alkyl, optionally substituted with
i) C1-C4-n-alkyl, or
ii) aryl selected from phenyl, p-tolyl or 2-naphthyl, or
iii) -OR³, with R³ being tetrahydropyran-2-yl, 1-ethoxy-ethyl, phenyl, p-tolyl, benzyl, 2-naphthyl, -CH₂-2-naphthyl, methyl, ethyl or 2-propyl, or
R¹ CHR² together represents C5 or C6 cycloalkyl.

A preferred embodiment of the method according to the present invention is characterized in that the secondary phosphine is (2R,5R)-2,5-dimethyl phospholane (formula IIIa) or (2R,5R)-2,5-diisopropyl phospholane (formula IIIb). Another embodiment is characterized in that the secondary phosphine is (3R,5R)-3,5-dimethyl-[1,4]oxaphosphinane (formula IV).

Advantageously, the method further comprises reacting the secondary phosphine with BH₃ to give a borane complex. Thereby the work-up is significantly facilitated. Secondary phosphine borane complexes also represent electron rich chiral building blocks for the synthesis of diphosphines with chiral or achiral backbone.

According to another preferred embodiment, the method further comprises reacting the secondary phosphine of general formula Ia or Ib or the corresponding borane complex with n-butyl lithium and a sulfonate of general formula IIa or IIc or a cyclic sulfate of general formula IIb or IId to obtain a tertiary phosphine or diphosphine, respectively.

According to the above embodiment, tertiary chiral phosphines either with C₁ symmetry or with C₃ symmetry are generally available.

According to a particularly preferred embodiment of the method according to the present invention, R¹ is -CH₂OR⁴ with R⁴ being benzyl, and R² is methyl. Suitably, this method further comprises reacting the secondary phosphine with BH₃ to give the borane complex V.

Preferably, the method according to this embodiment further comprises reacting the borane complex V with mesylate of formula IIa, wherein R¹ is -CH₂OR⁴ with R⁴ being benzyl, and R² is methyl, to obtain tertiary phosphine VI with C₃ symmetry. After conversion to a phosphonium salt, the protective group R⁴ is advantageously cleaved with Pd/C under hydrogen, suitably followed by treatment with weakly basic ion exchange resin, to give the tertiary phosphine of formula VII.

Among the various hydroxy substituted α-chiral monophosphines with C₃ symmetry the compound of formula VII represents the smallest molecule of this type, displaying a remarkable solubility in water due to the low molecular weight and the presence of three hydroxy groups. The water solubility of ligands and corresponding transition metal complexes gives the opportunity to run catalytic reactions also in aqueous media. As positive consequences separation of products and recovery of catalysts are facilitated and environmentally friendly processes can be established.

According to another preferred aspect, the above embodiment further comprises reacting the borane complex V with dimesylate of formula VIII to give bisborane complex IX.

According to a further general embodiment, the inventive method further comprises reacting the borane complex with a backbone of general formula Xa or Xb 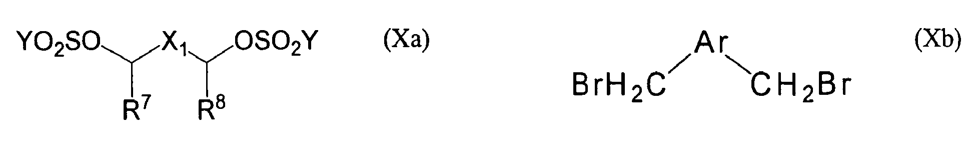 wherein Y is as defined in claim 1, X₁ represents (CH₂)ₙ with n = 1-4, CH₂OCH₂ or CH₂NR⁵CH₂ wherein R⁵ is C1-C4-alkyl, R⁷, R⁸ independently represent H or
C1-C6 n-alkyl optionally substituted with
i) C1-C4-n-alkyl,
ii) aryl selected from phenyl, p-tolyl or 2-naphthyl,
iii) -OR³ , with R³ being tetrahydropyran-2-yl, 1-ethoxy-ethyl, phenyl, p-tolyl, benzyl, 2-naphthyl, -CH₂-2-naphthyl, methyl, ethyl or 2-propyl,
iv) CH₂OR⁴, with R⁴ being tetrahydropyran-2-yl, phenyl, p-tolyl, benzyl, 2-naphthyl or -CH₂-2-naphthyl, or
v) dimethyl amine or di-(2-propyl)amine,
and Ar represents aryl or biaryl,
to obtain the borane complex of a diphosphine of general formula XIa and XIb.

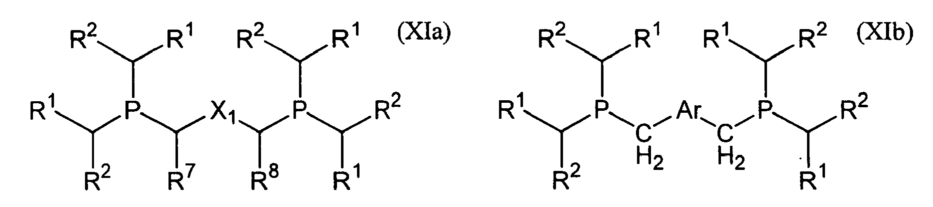

The diphosphines obtained by this method are preferably compounds of formula XIIa, XIIb or XIIc, or of formula XIII, particularly XIIIa, or of formula XIV, or of formula XV, particularly XVa or XVb,wherein P* represents the group P(CHR¹R²)₂ and R⁹ is methyl or - OCH₃.

The further object of the present invention is achieved by secondary phosphines, preferably α-chiral phosphines, of general formula I, obtainable by the method according to the present invention, with the exception of the following known phosphines: diisopropylphosphine, diisobutylphosphine, dicyclopentylphosphine, dicyclohexylphosphine, 2,5-dimethyl phospholane, 2,5-diethyl phospholane, 2,5-diisopropyl phospholane, 2,6-dimethyl phosphinane, 3,5-dimethyl-[1,4]oxaphosphinan, 3,5-diisopropyl-[1,4]oxaphosphinane and bis-(1-methyl-2-phenyl-ethyl)-phosphine.

Another aspect of the invention relates to tertiary phosphines, preferably α-chiral phosphines, obtainable by the method according to the invention.

According to another aspect, the invention provides diphosphines of general formula XIa or XIb, obtainable by the method according to the invention.

The invention will now be described in more detail by way of the following examples.

### Examples:

### Synthesis of Dicyclopentylphosphine borane complex

Powdered black Na₃P (1.50 g, 15 mmol) is placed in a Schlenk tube and suspended in degassed dry THF (80 mL). The mixture is cooled to 0 °C and a solution of cyclopentyltosylate (7.69 g, 32 mmol) in THF (20 mL) is added slowly. The reaction is stirred for 10 h at 55 °C and after cooling to room temperature, MeOH (5 mL) is added and solids are separated by filtration. Solvents are evaporated under vacuum and fractional distillation of the crude residue affords dicyclopentylphosphine. Optionally this can be converted to the BH₃ complex by stirring with excess of BH₃·THF complex in THF at 0 °C for 1 h.
Yield: 40-48%; white deliquescent solid; m.p.: 25-30 °C
¹H NMR (CDCl₃, δ): 4.43 (dm, *J_{PH}=* 350 Hz, 1H, PH); 2.17-2.10 (m, 2H); 2.00-1.84 (m, 4H); 1.70-1.55 (m, 12H); 0.81-0.00 (m, BH₃, 3H). ¹³C NMR (CDCl₃, δ): 30.10 (d, *J*= 36.2 Hz); 30.09; 28.30 (d, *J=* 2.2 Hz); 26.24 (d, *J*= 8.3 Hz); 26.12 (d, *J*= 7.7 Hz). ³¹P NMR (CDCl₃, δ): 15.86 (bs). MS (30 °C) m/z (rel%): 170 (100, M⁺-BH₃).

### Synthesis of Dicyclohexylphosphine borane complex

This was carried out in a similar manner as described above, yielding 20-40% of the title compound as a white solid; m.p.: 80-81 °C.

### Synthesis of (2R,5R)-2,5-Dimethylphospholane borane complex (IIIa)

Powdered Na₃P (180 mg, 1.8 mmol) and dry DMF (5 mL) are placed in a Schlenk tube and cooled to 0°C. To this suspension is added (2S,5,S)-hexane-2,5-diol dimesylate (493 mg, 1.8 mmol) in DMF (5 mL) and the reaction is stirred for 24 h at 55°C. After cooling to room temperature, water (0.5 mL) is added and stirring is continued for 30 min. This is followed by addition of degassed pentane (30 mL) and another 30 min period of vigorous stirring. The pentane layer is transferred via Teflon canula to a cooled solution of BH₃·THF (3 mL, 1 molar in THF, 3 mmol, 2 equiv.) and after stirring at room temperature for 2 h chilled HCl (2%, 3 mL) is added. The water layer is extracted with diethylether (2x 25 mL) and the combined organic phases are washed with water and brine and dried over MgSO₄. Filtration and evaporation of solvents leaves a colourless oil which is purified by column chromatography, (SiO₂, eluent: CH₂Cl₂ (20 %) / petroleum ether (80%)) to yield 78 mg (30 %) of (R,R)-2,5-dimethylphospholane borane complex.
Similar treatment of the corresponding cyclic sulfate yielded 58% of the borane complex.
¹H NMR (CDCl₃) δ: 4.39 (dm, *J_{PH}=* 347 Hz, 1H, PH); 2.53-2.46 (m, 1H); 2.24-2.04 (m, 3H); 1.60-1.27 (m, 2H); 1.29 (dd, *J=* 6.8, 15.5 Hz, 3H); 1.24 (dd, *J=* 7.3, 16.9 Hz, 3H); 0.91-0.00 (m, BH₃, 3H). ¹³C NMR (CDCl₃) δ: 35.78 (d, *J*= 7.3 Hz); 35.68 (d, *J=* 4.7 Hz,-); 32.33 (d, *J*= 36.3 Hz); 27.02 (d, *J*= 34.0 Hz); 16.86 (d, *J*= 3.0 Hz); 15.06 (d, *J*= 3.8 Hz). ³¹P NMR (CDCl₃, δ): 25.2 (bs). MS (30 °C) m/z (rel%): 129 (14, M⁺); 116 (100, M⁺-BH₃). [α]_{D}²⁰ = 3.2±0.5 (c: 0.3, CHCl₃).

### Synthesis of (2R,5R)-2,5-Diisopropylphospholane borane complex (IIIb)

The corresponding cyclic sulfate prepared according to a published procedure (Burk, M. et al., *J. Am. Chem. Soc.* **1993,** 115, 10125) was reacted with Na₃P as described for IIIa to yield 20% of IIIb as a white solid.
¹H NMR (CDC1₃, δ): 4.53 (dm, *J=* 347 Hz, 1H, PH); 2.25-1.85 (m, 4H); 1.75 (m, 1H); 1.45-1.25 (m, 3H); 1.07 (d, *J =* 6.8 Hz, 3H); 1.04 (d, *J =* 6.4 Hz, 3H); 0.98 (d, *J =* 6.6 Hz, 3H); 1.04 (d, *J=* 6.0 Hz, 3H); 0.91-0.20 (m, BH₃, 3H). ¹³C NMR (CDC1₃) δ: 45.85 (d, *J =* 37.0 Hz); 42.46 (d, *J=* 34.0 Hz); 32.22 (d, *J=* 3.0 Hz); 31.95; 31.09 (d, *J=* 5.1 Hz); 28.30 (d, *J=* 6.1 Hz); 23.74 (d, *J=* 3.3 Hz); 22.72 (d, *J =* 4.1 Hz); 21.55 (d, *J=* 3.0 Hz); 21.46. ³¹P NMR (CDCl₃) δ: 6.65 (bs). MS (30 °C) *m*/*z* (rel%): 172 (69, M⁺-BH₃). [α]D²⁰= -80.2±2.0 (c: 0.15, CHCl₃).

### Synthesis of (3R,5R)-3,5-Dimethyl-[1,4]oxaphosphinane borane complex (IV·BH₃)

Powdered Na₃P (162 mg, 1.62 mmol) is suspended in dry DMF (5 mL) and (S,S)-dimesylate of 1-(2-hydroxy-propoxy)-propan-2-ol dissolved in DMF (2.5 mL) is added dropwise. The reaction mixture is stirred for 24 h at 55°C. After cooling to room temperature water (0.5 mL) is added and the mixture is stirred for 30 min, followed by addition of pentane (30 mL) and another 30 min of stirring. The organic layer is added dropwise to a BH₃-THF solution (3 mL of a 1 molar solution in THF, 3 mmol) in an ice bath and the reaction is stirred for 2 h at room temperature before excess of reagent is destroyed with chilled HCl (3 mL, 2%). The organic phase is separated and the aqueous one is extracted with pentane (2x 25 mL). The organic layers are washed with water and brine and dried (MgSO₄). After removal of solvents the crude product is purified by chromatography (SiO₂, CH₂Cl₂ (40%) / petroleum ether (60%)) to give 132 mg (56%) of IV borane complex as a highly volatile oil.
¹H NMR (CDCl₃) δ: 4.49 (dm, *J_{PH}=* 345 Hz, 1H, PH); 4.12 (ddd, *J*= 4.4, 12.0, 16.2 Hz, 1H); 3.94 (ddd, *J* = 3.2, 12.2, 16.0 Hz, 1H); 3.75 (ddd, *J*= 2.6, 8.1, 12.2 Hz, 1H); 3.32 (ddd, *J*= 10.9, 11.2, 12.0 Hz, 1H); 2.11-2.00 (m, 2H, CH); 1.31 (dd, *J*= 7.5, 16.5 Hz, 3H, CH₃); 1.16 (dd, *J*= 7.3, 16.1 Hz, 3H, CH₃); 0.91-0.00 (m, BH₃, 3H). ¹³C NMR (CDCl₃) δ: 73.62 (d, *J*= 8.3 Hz); 73.15 (d, *J*= 7.3 Hz); 22.74 (d, *J*= 32.3 Hz); 22.57 (d, *J*= 33.0 Hz); 13.13 (d, *J* = 2.5 Hz); 12.03 (d, *J*= 3.2 Hz). ³¹P NMR (CDCl₃) δ: 6.32 (bs). MS (30 °C) m/z (rel%): 146 (3, M⁺); 132 (100, M⁺-BH₃).
[α]_{D}²⁰=-41.1 (c: 1, CHCl₃).

### Synthesis of (R,R,R)-Tris(1-hydroxypropane-2-yl)phosphane (VII)

### (R,R)-Bis(2-benzyloxy-1-methylethyl)phosphine borane complex (V)

To a solution of naphthalene (128 mg, 1 mmol) in THF (10 mL) prepared in a Schlenk tube under Ar is added sodium metal (230 mg, 10 mmol) in the form of small chunks, and the mixture is stirred for 30 min followed by addition of red phosphorus (102 mg, 3.3 mmol), previously dried by sequential washings with EtOH, C₆H₆, and THF. Upon stirring the mixture for 12 h at 50°C, a finely divided black precipitate of Na₃P is formed. The completeness of conversion is evidenced by the disappearance of sodium metal. The supernatant solution is sucked off and the precipitate is washed with THF and dried under vacuum. The yield of Na₃P is found to be ≥80 % of theoretical. Dry DMF (5 mL) is added and the suspension is cooled to 0°C. A solution of (*S*)-2-benzyloxy-1-methylethyl methansulfonate (1.62 g, 7.26 mmol) in THF (5 mL) is added at 0 °C and the mixture is stirred for 10 h at 55°C. All solvents are evaporated under vacuum and THF (10 mL) is added to the residue giving a gray suspension. Excess of borane tetrahydrofuran complex (10 mL, 1M in THF, 3.3 equiv.) is added at 0°C and after stirring at room temperature for 2 h the reaction is carefully quenched with ice cooled HC1 (2%, 20 mL) followed by diethylether (40 mL). The aqueous layer is extracted with diethylether (2x 25 mL) and the combined organic phases are washed with water and brine and dried over MgSO₄. Filtration and evaporation of solvents give a yellowish oil which is purified by column chromatography, (SiO₂, eluent diethylether (5%) / petroleum ether (95%)). Yield: 614 mg (54%) of (*R*,*R*)-bis(2-benzyloxy-1-methylethyl)phosphine borane V as a colourless oil.
¹H NMR (CDCl₃) δ: 7.34-7.27 (m, 10H); 4.53 (dm, *J_{PH}* = 365.1 Hz, 1H); 4.41 (dd, *J* = 5.8, 11.6 Hz, AB, 2H); 4.40 (dd, *J* = 11.8, 14.4 Hz, 2H); 3.69-3.52 (m, 4H); 2.42-2.31 (m, 2H); 1.22 (dd, *J*= 7.1, 14.9 Hz, 3H); 1.19 (dd, *J*= 7.1, 16.7 Hz, 3H); 0.91-0.00 (m, BH₃, 3H). ¹³C NMR (CDCl₃) δ: 137.89; 137.82; 128.38; 128.32; 127.**74**; 127.69; 127.64; 73.28; 73.18; 71.39 (d, *J* = 2.3 Hz); 71.03 (d, *J* = 2.3 Hz); 26.58 (d, *J* = 33.6 Hz) 26.11 (d, *J*= 33.6 Hz); 14.17 (d, *J*= 2.3 Hz); 12.56 (d, *J*= 1.5 Hz). ³¹**P** NMR (CDCl₃) δ: 9.86 (bd).
MS (90 °C, 50 eV) m/z (rel%): 343 (8, M⁺). HRMS for C₂₀H₂₉BO₂P calc. 343.2002, found 343.1991.
[α]D²⁰= -4.2±0.09 (CHCl₃, c: 4.5).

### (R,R,R)-Tris(2-benzyloxy-1-methylethyl)phosphine (VI) borane complex

(R,R)-Bis(2-benzyloxy-1-methylethyl)phosphine borane complex V (406 mg, 1.18 mmol) is dissolved in anhydrous THF (6 mL) and the solution is cooled to 0°C. *n*-BuLi (0.54 mL, 2.5 molar in hexane, 1.25 mmol) is added dropwise over 15 min. After stirring the reaction at 0°C for 30 minutes (*S*)-2-benzyloxy-1-methylethyl methansulfonate (366 mg, 1.5 mmol) is added dropwise. Once addition is complete, the reaction mixture is heated to 55°C for 2 h, cooled down in an ice bath and quenched by dropwise addition of chilled HCl (1N, 10 mL). The organic phase is separated and the aqueous phase is extracted with diethylether (2x 25 mL). The combined organic phases are dried over MgSO₄ and filtrated. Removal of the solvent leaves a colourless oil which is subjected to column chromatography (SiO₂, eluent: diethylether (5%) / petroleum ether (95%)) to yield 660 mg (78%) of of the borane complex of (*R*,*R*,*R*)-tris(2-benzyloxy-1-methylethyl)phosphine VI.
¹H NMR (CDCl₃) δ: 7.29-7.25 (m, 15H); 4.36 (s, 6H); 3.74-3.68 (m, 3H); 3.55-3.49 (m, 3H); 2.41-2.35 (m, 3H); 1.23 (dd, *J*= 7.1, 13.1 Hz, 9H); 0.91-0.00 (m, BH₃, 3H). ¹³C NMR (CDCl₃) δ: 138.09; 128.35; 127.75; 127.64; 73.06; 71.34 (d, *J*= 4.6 Hz); 27.46 (d, *J*= 29.8 Hz); 12.88 (d, *J*= 3.1 Hz). ³¹P NMR (CDCl₃) δ: 33.46 (bd). MS (150 °C, 50 eV) m/z (rel%): 491 (1). HRMS for C₃₀H₄₁BO₃P calc. 491.2892, found 491.2901.
[α]_{D}²⁰ = 20±0.3 (CHCl₃, c: 0.44).

### (R,R,R)-Tris(2-hydroxy-1-methylethyl)phosphonium tetrafluoroborate (VII•HBF₄)

A solution of (R,R,R)-tris(2-benzyloxy-1-methylethyl)phosphine borane complex (900 mg, 1.83 mmol) in dry CH₂Cl₂ (15 mL) is prepared in a Schlenk tube under Ar and cooled to -10°C. To this was added dropwise HBF₄ (2.5 mL of a 54% solution in diethylether, 18 mmol) and the mixture is slowly warmed up to room temperature with stirring overnight. After removing the solvent under reduced pressure the Schlenk tube is filled with Ar. The crude phosphonium tetrafluoroborate is dissolved in oxygen-free ethanol (p.A. 20 mL) and transferred into a high pressure glass tube containing Pd/C (0.60 g 10% on coal, 0.56 mmol) and a stirring bar. The tube is filled with H₂ and the suspension is stirred under 3 atm of H₂ for 91 h at room temperature. After releasing the pressure, the mixture is filtered through celite and the solvent is evaporated. The oily residue is washed by agitating subsequently with Et₂O and toluene, and the washings are discharded. The crude product is dissolved in EtOH, passed through a pad of cotton and evaporated to yield 490 mg (92 %) of VII·HBF₄ as a yellowish hygroscopic oil.
¹H NMR (CD₃OD) δ: 6.02 (dm, *J_{PH}=* 479 Hz, 1H, P*H*), 4.00-3.76 (m, 6H, C*H*₂), 3.03-2.95 (m, 3H, C*H*), 1.41 (dd, *J*= 16.9, 7.3 Hz, 9H, C*H*₃). ¹³C NMR (CD₃OD) δ: 63.69 (d, *J* = 4.6 Hz), 29.94 (d, *J* = 45.0 Hz), 13.44 (d, *J* = 2.5 Hz). ³¹P NMR (CD₃OD) δ: 27.01 (s). MS(electrospray): 209 (100%, M⁺).
[α]_{D}²⁰ = -17.0 (c: 1, CH₃OH).

### (R,R,R)-Tris(2-hydroxy-1-methylethyl)phosphonium trifluoromethansulfonate (VII·HOSO₂CF₃)

An analogous procedure as described above for the tetrafluoroborate was applied yielding 94% of the corresponding trifluoromethansulfonate of VII.
¹H NMR (CD₃COCD₃) δ: 6.16 (dm, *J_{PH} =* 477 Hz, 1H, PH), 4.11-3.86 (m, 6H, C*H*₂), 3.22-3.10 (m, 3H, CH), 1.52 (dd, *J=* 18.2, 7.3 Hz, 9H, CH₃). ¹³C NMR (CD₃OD) δ: 122.18 (q, *J_{CF} =* 320 Hz); 63.10 (d, *J=* 4.5 Hz), 29.71 (d, *J=* 43.5 Hz), 12.96 (d, *J=* 2.6 Hz). ³¹P NMR (CD₃OD) δ: 27.53 (s).
MS(electrospray): 209 (100%, M⁺).
[α]_{D}²⁰= -5.9 (c: 1, CH₃OH).

### (R,R,R)-Tris(1-hydroxypropane-2-yl)phosphane (VII)

A solution of the above tetrafluoroborate (225 mg, 0.76 mmol) in methanol (15 mL) was passed through a column filled with weakly basic ion exchange resin (5 x 3 cm, Amberlyst A21 20-50 mesh, OH form). The resin was washed with methanol (30 mL). Evaporation yielded 150 mg (95%) of VII as a yellowish oil.
¹H NMR (CD₃OD) δ: 3.63-3.59 (m, 3H, CH₂), 3.34 (m, 3H, CH₂), 1.91 (m, 3H, C*H*), 1.41 (dd, *J*= 6.8, 9.1 Hz, 9H, CH₃). ¹³C NMR (CD₃OD) δ: 66.45 (d, *J*= 26.6 Hz), 29.90 (d, *J*= 13.7 Hz), 13.50 (d, *J*= 5.2 Hz). ³¹P NMR (CD₃OD) δ: -6.73 (s).

### Synthesis of the boron complex of (2R,5R)-2,5-Bis(bis-(R)-(2-benzyloxy-1-methylethyl))phosphinyl-hexane (IX)

(R,R)-Bis(2-benzyloxy-1-methyl-ethyl)phosphine borane complex V (230 mg, 0.67 mmol) is dissolved in dry THF (4 mL) and the solution is cooled to 0°C. *n*-BuLi (0.3 mL of a 2.5 molar solution in hexane, 0.75 mmol) is added dropwise over 15 min. and the solution is stirred for 30 min at 0°C. (*2S*,*5S*)-Hexane-2,5-diyl dimesylate (88 mg, 0.32 mmol) dissolved in THF (2 mL) is added dropwise and once addition is complete, the reaction mixture is heated to 55 °C for 3 h. The cooled reaction mixture is dropwise added to ice-cold aqueous HCl (1N, 5 mL). The organic phase is separated and the aqueous phase is extracted with Et₂O (2× 25 mL) and the organic layers are combined, dried over MgSO₄ and filtrated. The solvent is evaporated to give a colourless oil which is purified by flash chromatography (SiO₂, diethylether (50%) / petroleum ether (50%)) to yield 111 mg (45%) of IX·BH₃.
¹H NMR (CDCl₃) δ: 7.29-7.25 (m, 20H); 4.45-4.39 (m, 8H); 3.71-3.68 (m, 4H); 3.55-3.47 (m, 4H); 2.38 (m, 2H); 2.24 (m, 2H); 1.87 (m, 2H); 1.74 (m, 2H); 1.37 (m, 2H); 1.24 (dd, *J*= 7.0, 12.5 Hz, 6H); 1.19 (dd, *J=* 7.0, 13.0 Hz, 6H); 1.23 (dd, *J=* 7.0, 13.6 Hz, 6H); 0.91-0.00 (m, BH₃, 6H). ¹³C NMR (CDCl₃) δ: 137.99; 128.38; 128.35; 127.78; 127.75; 127.68; 127.67; 73.14; 73.09; 71.47 (d, *J=* 4.2 Hz); 71.38 (d, *J*= 3.8 Hz); 29.46 (d, *J*= 11.2 Hz); 27.42 (d, *J* = 28.1 Hz); 27.02 (d, *J=* 28.1 Hz); 25.93 (d, *J*= 30.0 Hz); 13.91 (d, *J*= 3.3 Hz); 13.06 (d, *J* = 3.3 Hz); 12.76 (d, *J*= 2.2 Hz). ³¹P NMR (CDCl₃) δ: 36.28 (bd). MS (260 °C, 50 eV) m/z (rel%) 756 (1.3, M⁺).
[α]_{D}²⁰ = +17.3 (c 2.0, CHCl₃).

### Synthesis of (R,R)-1,3-Bis-{[bis-(2-benzyloxy-1-methyl-ethyl)-phosphinyl]-methyl}-benzene-2BH₃

(*R*,*R*)-Bis-(2-benzyloxy-1-methyl-ethyl)-phosphine borane complex V (310 mg, 0.90 mmol) is dissolved in anhydrous THF (4 mL) and the solution is cooled to -78°C. *n*-BuLi (1.6 molar solution in hexane, 0.6 mL, 0.95 mmol) is added dropwise and the reaction is stirred for 20 min at 0°C. The temperature is lowered to -78°C and 1,3-bis(bromomethyl)benzene (119 mg, 0.45 mmol) in THF (2.5 mL) is added and the mixture is allowed to warm up to room temperature. After quenching with HCl (1N, 5 mL) and extractive work-up with CH₂Cl₂ the crude diborane complex is purified by column chromatography (SiO₂, Et₂O (10→30%) / petroleum ether (90→70%)) to yield 226 mg (64%) of the diborane complex as a colorless oil.
¹H NMR (CDCl₃) δ: 7.35-7.09 (m, 24H, Ar-H); 4.39 (dd, *J* = 1.2, 11.8 Hz, 2H, Ar-CH₂O); 4.38 (dd, *J* = 2.8, 15.2 Hz, 2H, Ar-CH₂O); 3.65-3.46 (m, 8H, CH₂); 3.12 (dd, *J* = 13.1, 13.5 Hz, 2H, Ar-CH₂P); 3.10 (dd, *J*= 13.1, 14.0 Hz, 2H, Ar-CH₂P); 2.29-2.20 (m, 4H); 1.18 (dd, *J*= 7.3, 14.9 Hz, 6H); 1.19 (dd, *J*= 7.5, 14.8 Hz, 6H); 0.91-0.00 (m, BH₃, 6H). ¹³C NMR (CDCl₃) δ: 137.99; 133.52 (d, *J*= 5.8 Hz); 128.84 (d, *J*= 4.1 Hz); 128.54; 128.38; 127.78; 127.68; 126.98; 73.16; 73.14; 71.29 (d, *J*= 3.1 Hz); 71.24 (d, *J*= 3.1 Hz); 29.31 (d, *J*= 29.3 Hz); 28.45 (d, *J*= 29.3 Hz); 28.15 (d, *J* = 29.2 Hz); 12.56 (d, *J*= 1.5 Hz); 12.45 (d, *J =* 1.5 Hz). ³¹P NMR (CDCl₃) δ: 31.27 (bd). MS (260 °C, 50 eV) m/z (rel%): 790 (1.3, M⁺).

## Claims

1. A method for preparing di-α-chiral and achiral di(sec. alkyl)phosphines of general formula Ia or Ib 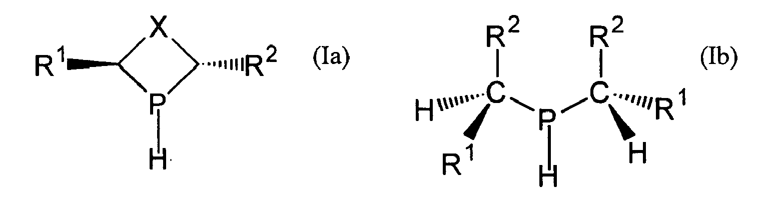 wherein
a) R¹, R² independently represent C1-C6 n-alkyl, optionally substituted with
i) C1-C4-n-alkyl,
ii) aryl selected from phenyl, p-tolyl or 2-naphthyl,
iii) -OR³, with R³ being tetrahydropyran-2-yl, 1-ethoxy-ethyl, phenyl, p-tolyl, benzyl, 2-naphthyl, -CH₂-2-naphthyl, methyl, ethyl or 2-propyl,
iv) CH₂OR⁴, with R⁴ being tetrahydropyran-2-yl, 1-ethoxy-ethyl, phenyl, p-tolyl, benzyl, 2-naphthyl, -CH₂-2-naphthyl, or
v) dimethyl amine or di-(2-propyl)amine, or
b) R¹CHR² in formula Ib together represents C5 or C6 cycloalkyl,
and X represents (CH₂)ₙ with n = 1-3, CH₂OCH₂ or CH₂NR⁵CH₂ wherein R⁵ is C1-C4-alkyl or 2-propyl,
**characterized in that** sulfonates of general formula IIa or IIc or sulfates of general formula IIb or IId, wherein Y is selected from methyl, phenyl, p-tolyl, and p-bromophenyl, and X, R¹ and R² are defined as above, are reacted with M₃P, wherein M is selected from Li, Na, K, and mixtures thereof, preferably Na.

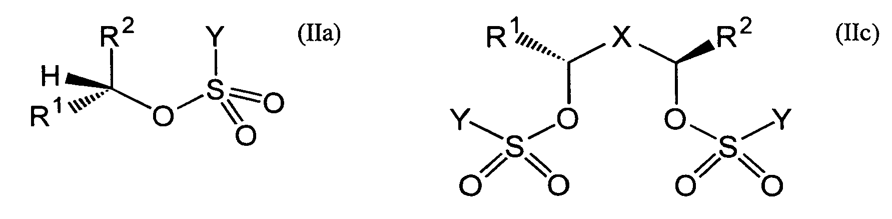

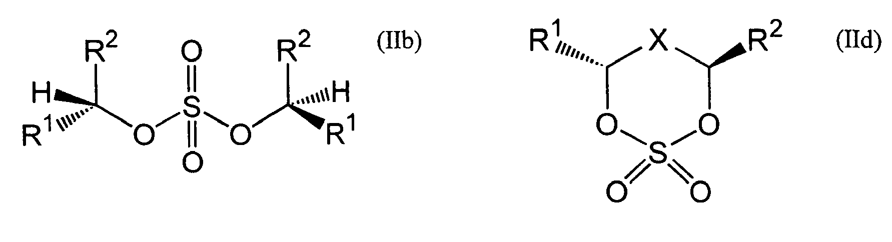

2. The method according to claim 1, **characterized in that** R¹, R² independently represent C1-C6 n-alkyl, optionally substituted with
i) C1-C4-n-alkyl,
ii) aryl selected from phenyl, p-tolyl or 2-naphthyl, or
iii) -OR³, with R³ being tetrahydropyran-2-yl, 1-ethoxy-ethyl, phenyl, p-tolyl, benzyl, 2-naphthyl, -CH₂-2-naphthyl, methyl, ethyl or 2-propyl, or
iv) CH₂OR⁴, with R⁴ being tetrahydropyran-2-yl, 1-ethoxy-ethyl, phenyl, p-tolyl, benzyl, 2-naphthyl, -CH₂-2-naphthyl, or
R¹CHR² together represents C5 or C6 cycloalkyl.

3. The method according to claim 2, **characterized in that** R¹, R² independently represent C1-C6 n-alkyl, optionally substituted with
i) C1-C4-n-alkyl, or
ii) aryl selected from phenyl, p-tolyl or 2-naphthyl, or
iii) -OR³, with R³ being tetrahydropyran-2-yl, 1-ethoxy-ethyl, phenyl, p-tolyl, benzyl, 2-naphthyl, -CH₂-2-naphthyl, methyl, ethyl or 2-propyl, or
R¹CHR² together represents C5 or C6 cycloalkyl.

4. The method according to any of claims 1 to 3, **characterized in that** the secondary phosphine is (2R,5R)-2,5-dimethyl phospholane (formula IIIa) or (2R,5R)-2,5-diisopropyl phospholane (formula IIIb)

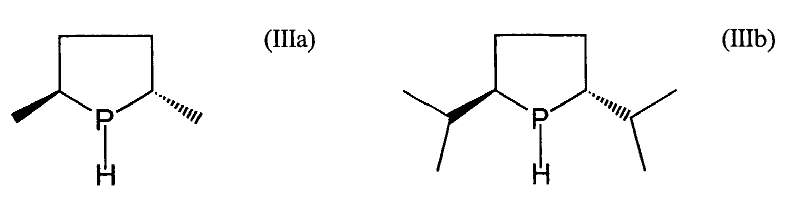

5. The method according to any of claims 1 to 3, **characterized in that** the secondary phosphine is (3R,5R)-3,5-dimethyl-[1,4]oxaphosphinane (formula IV).

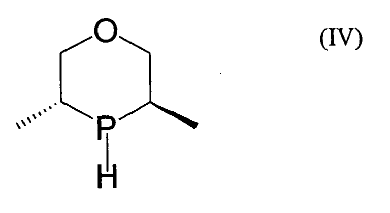

6. The method according to any of claims 1 to 5, **characterized in that** it further comprises reacting the secondary phosphine with BH₃ to give a borane complex.

7. The method according to any of claims 1 to 6, **characterized in that** it further comprises reacting the secondary phosphine of general formula Ia or Ib or the corresponding borane complex with n-butyl lithium and a sulfonate of general formula IIa or IIc or a cyclic sulfate of general formula IIb or IId to obtain a tertiary phosphine or diphosphine, respectively.

8. The method according to any of claims 1 to 3, **characterized in that** R¹ is -CH₂OR⁴ with R⁴ being benzyl, and R² is methyl.

9. The method according to claim 8, **characterized in that** it further comprises reacting the secondary phosphine with BH₃ to give the borane complex V.

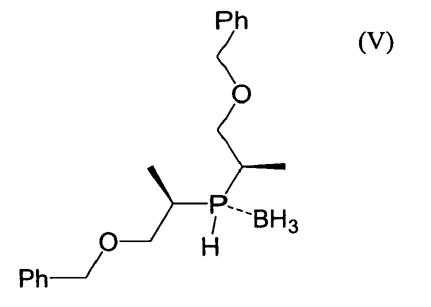

10. The method according to claim 9, **characterized in that** it further comprises reacting the borane complex V with mesylate of formula IIa, wherein R¹ is -CH₂OR⁴ with R⁴ being benzyl, and R² is methyl, to obtain tertiary phosphine borane complex VI with C₃ symmetry.

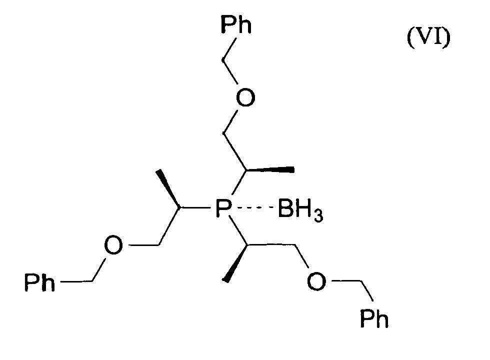

11. The method according to claim 10, **characterized in that** it further comprises converting the tertiary phosphine VI to a phosphonium salt and cleaving the protective group R⁴ with Pd/C under hydrogen to give the tertiary phosphine of formula VII.

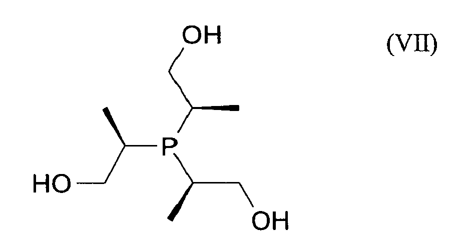

12. The method according to claim 9, **characterized in that** it further comprises reacting the borane complex V with dimesylate of formula VIII to give bisborane complex IX.

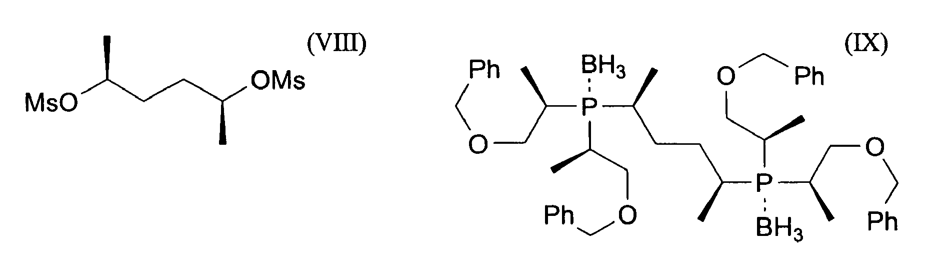

13. The method according to claim 6, **characterized in that** it further comprises reacting the borane complex with a backbone of general formula Xa or Xb 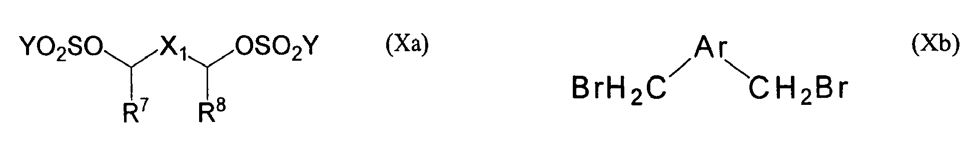 wherein Y is as defined in claim 1, X₁ represents (CH₂)ₙ with n = 1-4, CH₂OCH₂ CH₂SCH₂ or CH₂NR⁵CH₂ wherein R⁵ is C1-C4-alkyl or benzyl, R⁷, R⁸ independently represent C1-C6 n-alkyl optionally substituted with
i) C1-C4-n-alkyl,
ii) aryl selected from phenyl, p-tolyl or 2-naphthyl,
iii) -OR³, with R³ being tetrahydropyran-2-yl, phenyl, p-tolyl, benzyl, 2-naphthyl, -CH₂-2-naphthyl, methyl, ethyl or2-propyl,
iv) CH₂OR⁴, with R⁴ being tetrahydropyran-2-yl, phenyl, p-tolyl, benzyl, 2-naphthyl or -CH₂-2-naphthyl, or
v) dimethyl amine, di-(2-propyl)amine, dibenzyl amine, or
and Ar represents aryl or biaryl,
to obtain the borane complex of a diphosphine of general formula XIa and XIb.

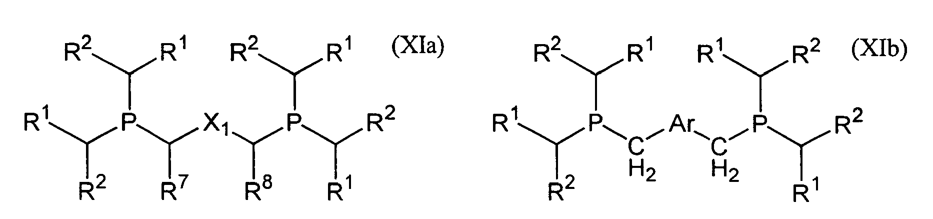

14. The method according to claim 13, **characterized in that** the diphosphine obtained is a compound of formula XIIa, XIIb or XIIc, wherein P* represents the group P(CHR¹R²)₂.

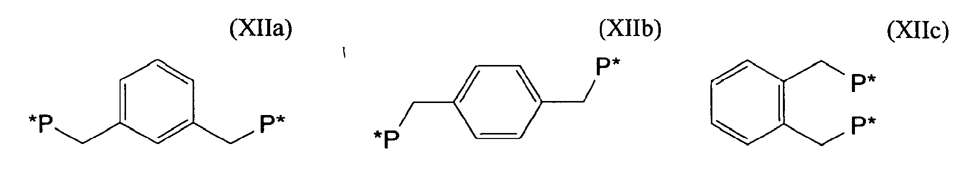

15. The method according to claim 13, **characterized in that** the diphosphine obtained is a compound of formula XIII, preferably XIIIa, wherein P* represents the group P(CHR¹R²)₂.

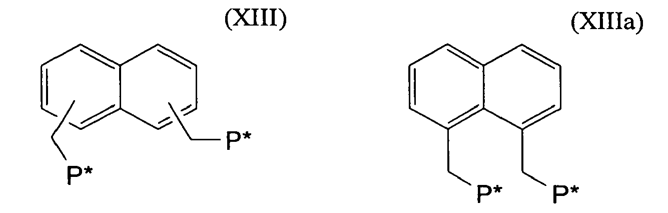

16. The method according to claim 13, **characterized in that** the diphosphine obtained is a compound of formula XIV, wherein P* represents the group P(CHR¹R²)₂.

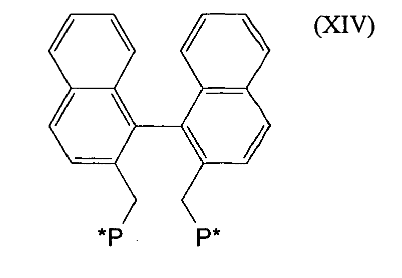

17. The method according to claim 13, **characterized in that** the diphosphine obtained is a compound of formula XV, preferably XVa or XVb, wherein P* represents the group P(CHR¹R²)₂ and R⁹ is methyl or -OCH₃.

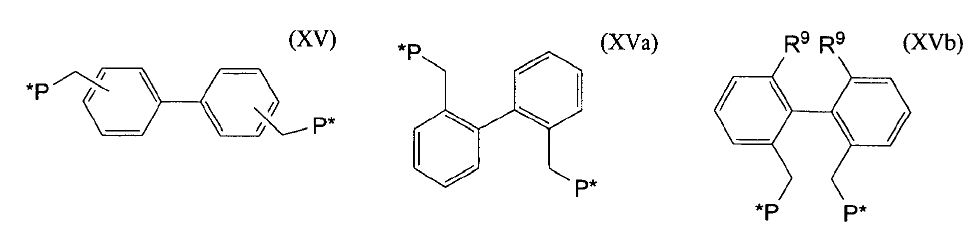

18. Secondary phosphines, preferably α-chiral phosphines, of general formula I, with the exception of diisopropylphosphine, diisobutylphosphine, dicyclopentylphosphine, dicyclohexylphosphine, 2,5-dimethyl phospholane, 2,5-diethyl phospholane, 2,5-diisopropyl phospholane, 2,6-dimethyl phosphinane, 3,5-dimethyl-[1,4]oxaphosphinan, 3,5-diisopropyl-[1,4]oxaphosphinane and bis-(1-methyl-2-phenyl-ethyl)-phosphine, obtainable by the method according to any of claims 1 to 7.

19. Tertiary phosphines, preferably α-chiral phosphines, obtainable by the method according to claim 7.

20. Diphosphines of general formula XIa or XIb, obtainable by the method according to claim 13.
